# EUROPÄISCHE PATENTSCHRIFT

(11) **EP 3 424 763 B1**
(45) Veröffentlichungstag und Bekanntmachung des Hinweises auf die Patenterteilung: **28.10.2020**
(21) Anmeldenummer: 18178916.5
(22) Anmeldetag: 21.06.2018
(51) Int. Cl.: B60J 7/06, B60J 7/185

(54) **NUTZFAHRZEUGAUFBAU MIT EINEM SCHIEBEVERDECK UND NUTZFAHRZEUG MIT EINEM SOLCHEN NUTZFAHRZEUGAUFBAU**
COMMERCIAL VEHICLE STRUCTURE WITH SLIDABLE COVER AND COMMERCIAL VEHICLE WITH SUCH A COMMERCIAL VEHICLE STRUCTURE
STRUCTURE DE VÉHICULE UTILITAIRE DOTÉE D'UNE BÂCHE COULISSANTE ET VÉHICULE UTILITAIRE DOTÉ D'UNE TELLE STRUCTURE DE VÉHICULE UTILITAIRE

(30) Priorität: 03.07.2017 DE 202017103953 U
(43) Veröffentlichungstag der Anmeldung: 09.01.2019
(73) Patentinhaber: Kögel Trailer GmbH, 89349 Burtenbach (DE)
(72) Erfinder: BROLL, Tobias, 86381 Krumbach-Billenhausen (DE); OKUMUS, Harun, 89349 Burtenbach (DE)
(74) Vertreter: Kilchert, Jochen

(56) Entgegenhaltungen:
- DE-A1- 19 633 227
- DE-U1-202004 014 761
- DE-U1-202016 101 823

## Beschreibung

Die Erfindung betrifft einen Nutzfahrzeugaufbau mit einem Schiebeverdeck gemäß dem Oberbegriff des Patentanspruchs 1. Die Erfindung betrifft ferner ein Nutzfahrzeug mit einem solchen Nutzfahrzeugaufbau. Derartige Nutzfahrzeugaufbauten sind aus der Praxis bekannt.

Um eine Beladung von Nutzfahrzeugaufbauten auch von oben zu ermöglichen, sind oft Schiebeverdecke vorgesehen. Die Schiebeverdecke sind dabei entlang von Dachlängsträgern des Nutzfahrzeugaufbaus geführt. Entlang dieser Führung kann das Schiebeverdeck geöffnet bzw. geschlossen werden. Sowohl im geschlossenen, als auch im geöffneten Zustand sollte das Schiebeverdeck gesichert werden. Insbesondere im geöffneten Zustand sollte das Schiebeverdeck ebenfalls gesichert werden, so dass verhindert ist, dass sich das Schiebeverdeck selbständig oder durch äußere Umgebungseinflüsse schließt und so mit einer Beladeeinrichtung kollidiert.

Problematisch gestaltet sich grundsätzlich die Betätigung derartiger Schiebeverdecke, die meist in großer Höhe angeordnet sind. Oft sind Schiebeverdecke in einer Höhe von etwa 4 Metern über dem Boden vorgesehen, so dass zur Betätigung der Schiebeverdecke Stangen eingesetzt werden. Der Zugriff auf eine Verriegelungseinrichtung des Schiebeverdecks durch eine Stange ist jedoch erschwert oder gar verhindert, wenn der Nutzfahrzeugaufbau in voller Höhe beladen ist. Wegen der bis zum Schiebeverdeck ragenden Ladung ist die entsprechende Verriegelungseinrichtung für das geöffnete Schiebeverdeck oft nicht erreichbar.

Ein Nutzfahrzeugaufbau gemäß dem Oberbegriff des Patentanspruchs 1 ist beispielsweise aus DE 20 2016 101 823 U1 bekannt. Der Nutzfahrzeugaufbau umfasst ein Schiebeverdeck mit einer Verriegelungseinrichtung, die eine Art Schnappverschluss bildet. Dazu sind zwei schräg zueinander angeordnete Führungsflächen vorgesehen, die einen federvorgespannten Schnappriegel zu einer zwischen den Führungsflächen angeordneten Schnappausnehmung führen. Im Verriegelungszustand greift der Schnappriegel in diese Schnappausnehmung ein. Eine ähnliche Verriegelungseinrichtung für ein Schiebeverdeck ist außerdem in DE 20 2004 014 761 U1 offenbart.Bei beiden bekannten Verriegelungseinrichtungen ist das Entriegeln des Schiebeverdecks nur durch eine manuelle Betätigung des Schnappriegels möglich. Dieser muss gegen eine Federkraft aus der Schnappausnehmung herausgezogen werden, bevor das Schiebeverdeck geöffnet werden kann. Der Schnappriegel oder etwaige Betätigungsmittel sind insbesondere bei voller Beladung des Nutzfahrzeuaufbaus jedoch schwer erreichbar. Die Bedienung des meist in großer Höhe angeordneten Schiebeverdecks ist damit erschwert.

Die Aufgabe der Erfindung besteht folglich darin, einen Nutzfahrzeugaufbau mit einem Schiebeverdeck anzugeben, bei welchem eine einfache Ver- und Entriegelung des Schiebeverdecks im geöffneten Zustand ermöglicht ist, insbesondere auch bei voller Beladung des Nutzfahrzeugaufbaus. Ferner ist es Aufgabe der Erfindung, ein Nutzfahrzeug, insbesondere einen Planensattelauflieger, mit einem solchen Nutzfahrzeugaufbau anzugeben.

Diese Aufgabe wird im Hinblick auf den Nutzfahrzeugaufbau durch den Gegenstand des Anspruchs 1 und im Hinblick auf das Nutzfahrzeug durch den Gegenstand des Anspruchs 9 gelöst.

So beruht die Erfindung auf dem Gedanken, einen Nutzfahrzeugaufbau mit einem Schiebeverdeck anzugeben, das entlang von Dachlängsträgern geführt ist und wenigstens einen Endlaufwagen mit einem federvorgespannten Verriegelungsbolzen aufweist. Der Verriegelungsbolzen wirkt zur Arretierung des Endlaufwagens in einer Offenstellung und/oder einer Schließstellung des Schiebeverdecks mit einer Verschlussnase zusammen. Die Verschlussnase ist an einem Dachlängsträger befestigt und weist wenigstens zwei schräge Führungsflächen für den Verriegelungsbolzen auf.

Der federvorgespannte Verriegelungsbolzen ermöglicht es in Kombination mit den schrägen Führungsflächen der Verschlussnase, das Schiebeverdeck in einer Offenstellung und/oder einer Schließstellung zu verriegeln bzw. zu entriegeln, ohne den Verriegelungsbolzen selbst betätigen zu müssen. Vielmehr kann durch die schrägen Führungsflächen erreicht werden, dass durch Ziehen des Schiebeverdecks von der Schließstellung in die Offenstellung oder von der Offenstellung in die Schließstellung der federvorgespannte Verriegelungsbolzen entlang der schrägen Führungsflächen gleitet und so selbsttätig in eine entriegelnde Position gelangt. Damit ist es möglich, das Schiebeverdeck auch bei vollständig beladenem Nutzfahrzeugaufbau zu verriegeln bzw. zu entriegeln, indem das Schiebeverdeck einfach entlang der Dachlängsträger verschoben wird. Es ist insofern nicht notwendig, eine zusätzliche Betätigungseinrichtung für die Verriegelungsbolzen zu bedienen.

Die Verschlussnase bildet erfindungsgemäß eine zur Fahrzeuglängsachse weisende, v-förmige Spitze. Die v-förmige Spitze ist konkret durch die schrägen Führungsflächen gebildet, die in der Spitze zusammenlaufen. Auf diese Weise kann eine selbsttätige Verriegelung des Schiebeverdecks in der Offenstellung und außerdem eine selbsttätige Entriegelung des Schiebeverdecks zur Überführung in die Schließstellung erreicht werden. Ferner kann die Verschlussnase so am Fahrzeugaufbau angeordnet sein, dass sie einerseits zum Verriegeln des Schiebeverdecks in der Schließstellung und gleichzeitig zum selbsttätigen Entriegeln des Schiebeverdecks für die Überführung in die Offenstellung genutzt werden kann. Die beiden Führungsflächen, die zur Spitze hin v-förmig zulaufen, ermöglichen es vorzugsweise, dass der Verriegelungsbolzen durch entsprechend schwungvolle Schiebebewegung des Schiebeverdecks die Verschlussnase überwindet und so entweder eine Verschiebung des Schiebeverdecks freigibt oder das Schiebeverdeck in einer Offenstellung bzw. einer Schließstellung arretiert.

Insofern ist bevorzugt vorgesehen, dass der Verriegelungsbolzen mit einer Feder gekoppelt ist, wobei die Federkraft der Feder so bemessen ist, dass der Verriegelungsbolzen durch Ziehen des Endlaufwagens in Fahrzeuglängsrichtung ebenso in die Arretierposition überführbar ist. Mit anderen Worten ist der Verriegelungsbolzen derart federvorgespannt, dass der Verriegelungsbolzen durch adäquaten Kraftaufwand beim Verschieben des Schiebeverdecks entlang der Führungsflächen der Verschlussnase geführt und so in eine Position überführt wird, dass der Verriegelungsbolzen an der Verschlussnase vorbeigleiten kann. Sobald der Verriegelungsbolzen die Spitze der Verschlussnase überwunden hat, bewirkt die Federvorspannung, dass der Verriegelungsbolzen zurück in eine Arretierposition geführt wird.

In der Arretierposition hintergreift der Verriegelungsbolzen vorzugsweise die Verschlussnase. Der Verriegelungsbolzen ist also in Fahrzeuglängsrichtung vor oder hinter der Verschlussnase angeordnet. Die Verriegelung des Schiebeverdecks bzw. des Endlaufwagens in der Offenstellung und/oder der Schließstellung erfolgt somit dadurch, dass der Verriegelungsbolzen hinter der Verschlussnase angeordnet ist, wobei die Verschlussnase als Anschlag für den Verriegelungsbolzen wirkt. Wegen der schrägen Führungsflächen ist dieser Anschlag überwindbar, wobei hierzu eine vorbestimmte Kraft erforderlich ist. Dabei ist die Federvorspannung des Verriegelungsbolzens vorzugsweise so bemessen, dass eine Überwindung des Anschlags, der durch die Verschlussnase gebildet ist, durch einen Anwender vergleichsweise einfach möglich ist. Gleichzeitig ist die Federvorspannung so angepasst, dass der Endlaufwagen bzw. das Schiebeverdeck ohne Einwirkung durch einen Benutzer in der Offenstellung bzw. der Schließstellung gehalten wird. Ein selbständiges Lösen des Schiebeverdecks aus der Offenstellung bzw. der Schließstellung ist verhindert.

Die Verschlussnase kann an einer Innenseite eines horizontalen Schenkels des Dachlängsträgers fixiert sein. Diese Position an einem Dachlängsträger ist zur Anbringung der Verschlussnase besonders vorteilhaft. Üblicherweise besteht dort ein ausreichender Freiraum, um die Verschlussnase montieren zu können. Ferner ist damit sichergestellt, dass einerseits die Innenraumhöhe eines Nutzfahrzeugaufbaus nicht beeinträchtigt wird und andererseits der Verriegelungsmechanismus insgesamt geschützt im Nutzfahrzeugaufbau angeordnet ist.

Die Verschlussnase kann außerdem zwei seitliche Verbindungsflansche zur festen Verbindung, insbesondere zur Bolzen- oder Schraubenverbindung, mit dem Dachlängsträger aufweisen. Die beiden seitlichen Verbindungsflansche ermöglichen eine einfache Befestigung, insbesondere auch Nachrüstung der Verschlussnase an Dachlängsträgern eines Nutzfahrzeugaufbaus. Gleichzeitig beeinträchtigen die Verbindungsflansche die Führungsflächen der Verschlussnase nicht. Im Wesentlichen ist es sinnvoll, die Führungsflächen der Verschlussnase möglichst glatt auszubilden, so dass die Bolzen oder Schrauben hier störend wären. Insofern ist es vorteilhaft, separate Verbindungsflansche vorzusehen, in welche Bolzen und/oder Schrauben aufgenommen werden können und die einer Gleitbewegung des Verriegelungsbolzens entlang der schrägen Führungsflächen nicht hinderlich sind.

In einer besonders bevorzugten Ausführungsform ist vorgesehen, dass der Endlaufwagen zwei gegenüberliegende Verriegelungsbolzen aufweist, die mit einem Zugseil miteinander verbunden sind. Damit ist sichergestellt, dass der Endlaufwagen zu beiden Dachlängsträgern arretierbar ist. Dies erhöht die Bedienungssicherheit des Nutzfahrzeugaufbaus.

In diesem Zusammenhang ist es außerdem vorteilhaft, wenn an den gegenüberliegenden Dachlängsträgern jeweils wenigstens eine Verschlussnase angeordnet ist. Mit anderen Worten ist jedem der zwei gegenüberliegenden Verriegelungsbolzen vorzugsweise jeweils eine Verschlussnase am Dachlängsträger zugeordnet. So kann der Endlaufwagen in der Offenstellung und/oder der Schließstellung beidseitig arretiert werden.

Das Zugseil am Endlaufwagen ist vorzugsweise vorgesehen, um bei Betätigung den/die Verriegelungsbolzen entgegen der Federkraft der Feder in die Offenstellung zu überführen. Durch die Betätigung des Zugseils wird vorzugsweise erreicht, dass die Verriegelungsbolzen soweit gegen die sie beaufschlagende Feder gezogen werden, dass die Verriegelungsbolzen berührungsfrei an der Verschlussnase vorbeigleiten können. Auf diese Weise ist mit dem Zugseil eine zusätzliche Betätigungseinrichtung geschaffen, so dass das Entriegeln des Schiebeverdecks auch manuell betätigt werden kann. Somit ist auch eine manuelle Möglichkeit geschaffen, die Verriegelungsbolzen aus der Arretierposition zu lösen. Dies kann beispielsweise zweckmäßig sein, wenn sich die Verschlussnase wegen Verschmutzung oder temperaturbedingter Blockade der Verriegelungsbolzen nicht selbstständig überwinden lässt.

Ein nebengeordneter Aspekt der Erfindung betrifft ein Nutzfahrzeug, insbesondere einen Planensattelauflieger, mit einem zuvor beschriebenen Nutzfahrzeugaufbau.

Das Nutzfahrzeug kann insbesondere zusätzlich eine an den Dachlängsträgern geführte Seitenplane aufweisen, die in Fahrzeuglängsrichtung zum Öffnen bzw. Schließen verschiebbar sind.

Die Erfindung wird im Folgenden anhand eines bevorzugten Ausführungsbeispiels unter Bezugnahme auf die beigefügten, schematischen Zeichnungen näher erläutert. Darin zeigen:
- Fig. 1: eine Querschnittsansicht durch einen Dachlängsträger und einen Endlaufwagen eines Schiebeverdecks eines erfindungsgemäßen Nutzfahrzeugaufbaus nach einem bevorzugten Ausführungsbeispiel;
- Fig. 2: eine Aufsicht einer Verschlussnase für den Nutzfahrzeugaufbau gemäß Fig. 1; und
- Fig. 3: eine Untersicht auf den Dachlängsträger und den Endlaufwagen gemäß Fig. 1.

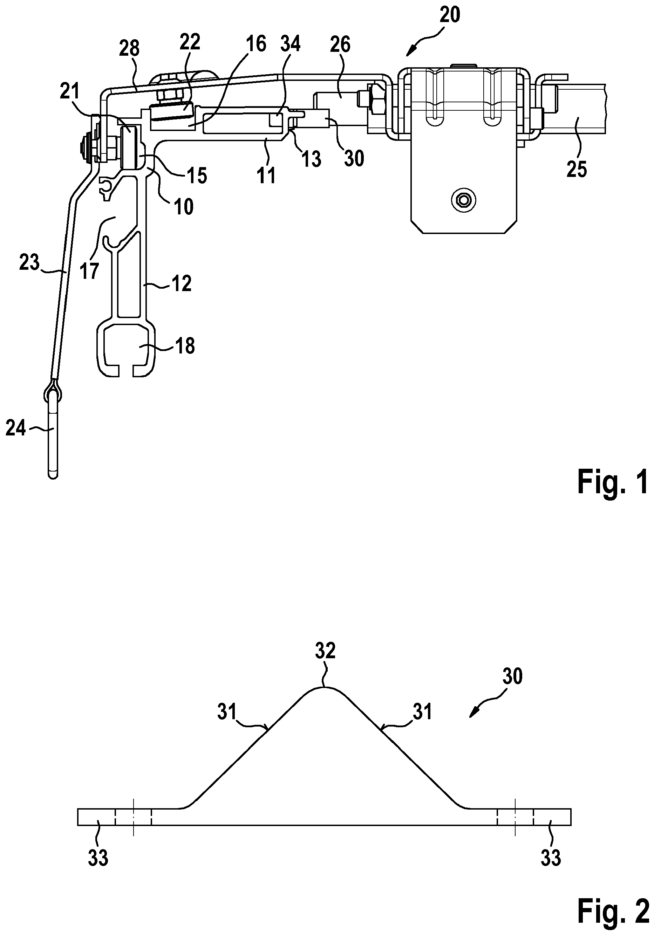

In Fig. 1 ist eine Querschnittsansicht durch eine obere Dachecke eines Nutzfahrzeugaufbaus gezeigt. Insbesondere ist ein Dachlängsträger 10 im Querschnitt dargestellt. Der Dachlängsträger 10 weist einen horizontalen Schenkel 11 und einen vertikalen Schenkel 12 auf. Im Wesentlichen bildet der Dachlängsträger ein L-Profil. Zur Gewichtsoptimierung sind im Dachlängsträger 10 Hohlräume ausgebildet.

Ferner umfasst der Dachlängsträger 10 eine Höhenführungsschiene 15, die im horizontalen Schenkel 11 angeordnet ist. In dem vertikalen Schenkel 12 ist etwa auf Höhe des horizontalen Schenkels 11 eine Höhenführungsschiene 15 vorgesehen. Im vertikalen Schenkel 12 sind außerdem eine Seitenplanenführungsschiene 17 und eine Schieberungenführungsschiene 18 vorgesehen.

An einer Innenseite 13 des horizontalen Schenkels 11 des Dachlängsträgers 10 ist eine Verschlussnase 30 angeordnet. Die Verschlussnase 30 ist insbesondere mit dem Dachlängsträger 10 durch Bolzen 34 verbunden. Auf die Gestaltung der Verschlussnase 30 und deren Funktion wird später näher eingegangen.

Fig. 1 zeigt außerdem in einer Vorderansicht einen Endlaufwagen 20 eines Schiebeverdecks. Der Endlaufwagen 20 umfasst eine Höhenführungsrolle 21, die in der Höhenführungsschiene 15 des Dachlängsträgers 10 geführt ist. Ferner ist eine Seitenführungsrolle 22 vorgesehen, die in der Seitenführungsschiene 16 des Dachlängsträgers 10 geführt ist. Der Endlaufwagen 20 umfasst außerdem einen Endspriegel 25, der sich im Wesentlichen auf Höhe des horizontalen Schenkels 11 des Dachlängsträgers 10 erstreckt. Insbesondere erstreckt sich der Endspriegel 25 zwischen zwei Dachlängsträgern 10 quer zu einer Fahrzeuglängsrichtung.

An den Endspriegel 25 schließt sich seitlich jeweils ein Außenschlitten 28 an. Der Außenschlitten 28 umgreift den horizontalen Schenkel 11 des Dachlängsträgers 10. Die Höhenführungsrolle 21 und die Seitenführungsrolle 22 sind jeweils am Außenschlitten 28 gelagert.

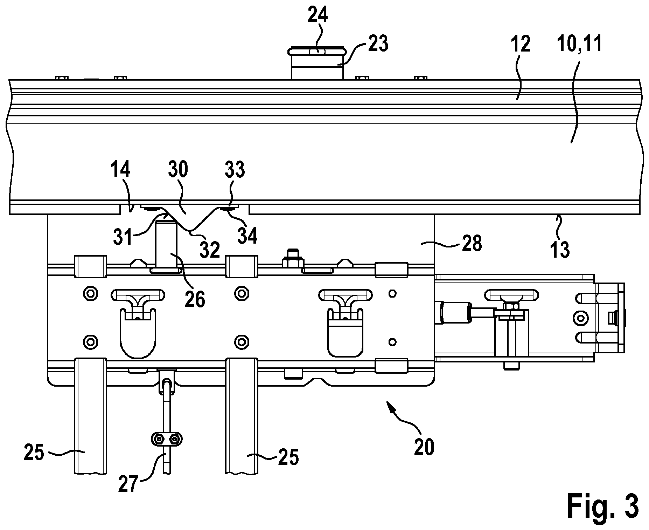

Wie in Fig. 3 erkennbar ist, ist im Außenschlitten 28 außerdem ein Verriegelungsbolzen 26 gelagert. Der Verriegelungsbolzen 26 erstreckt sich im Wesentlichen in Fahrzeugquerrichtung und ist federvorgespannt. Konkret ist im Außenschlitten 28 eine Feder (in den Figuren nicht sichtbar) vorgesehen, die auf den Verriegelungsbolzen 26 wirkt. Insbesondere wirkt die Feder derart, dass der Verriegelungsbolzen 26 nach außen, insbesondere in Richtung des Dachlängsträgers 10 gedrängt wird.

Der Verriegelungsbolzen 26 ist außerdem zur Fahrzeuglängsachse hin mit einem Zugseil 27 verbunden (Fig. 3). Das Zugseil 27 verläuft zwischen den beiden Außenschlitten 26 in Querrichtung zur Fahrzeuglängsrichtung. Das Zugseil 27 kann beispielsweise durch einen Bediener mittels einer Stange nach unten gezogen werden, wodurch sich der horizontale Abstand zwischen den Enden des Zugseils 27 verkürzt. Das bewirkt, dass die gegenüberliegend angeordneten Verriegelungsbolzen 26 jeweils zur Fahrzeuglängsachse zurückgezogen werden, also aus einer Arretierposition gelöst werden.

Fig. 2 zeigt schematisch eine Verschlussnase 30, die mit dem Verriegelungsbolzen 26 zusammenwirkt, um das Schiebeverdeck in einer Offenstellung bzw. einer Schließstellung zu arretieren. Die Verschlussnase 30 umfasst einen zentralen, im Wesentlichen dreieckförmigen Körper und zwei seitlich sich daran anschließende Verbindungsflansche 33. In den Verbindungsflanschen 33 ist jeweils eine Bohrung angeordnet, durch welche Bolzen 34 getrieben werden können. Alternativ können anstelle der Bolzen 34 auch Schrauben vorgesehen sein. Der im Wesentlichen dreieckförmige Hauptkörper bildet eine Spitze 32, die im montierten Zustand der Verschlussnase 30 zur Fahrzeuglängsachse weist (Fig. 3). Die Spitze 32 ist insbesondere durch zwei zueinander winklig angeordnete Führungsflächen 31 gebildet. Konkret weist die Verschlussnase 30 zwei Führungsflächen 31 auf, die schräg verlaufen.

Den Einbauzustand der Verschlussnase 30 zeigt Fig. 3 anschaulich. Die Verschlussnase 30 ist mit einer Innenseite 13 des Dachlängsträgers 10, insbesondere des horizontalen Schenkels 11, fest verbunden. Dazu ist insbesondere am horizontalen Schenkel 11 eine Ausnehmung 14 vorgesehen, in welche die Verschlussnase 30 eingesetzt ist. Durch Bolzen 34 oder Schrauben, die in den Verbindungsflanschen 33 der Verschlussnase 30 angeordnet sind, ist die Verschlussnase 30 an dem Dachlängsträger 10 fixiert. Die Verschlussnase 30 ist so am Dachlängsträger 30 befestigt, dass die Spitze 32 in Richtung der Fahrzeuglängsachse, insbesondere in Richtung des Zugseils 27 am Endlaufwagen 20, weist.

In der dargestellten Stellung gemäß Fig. 3 ist der Verriegelungsbolzen 26 in der Arretierposition. Es ist erkennbar, dass die Verschlussnase 30 in diesem Fall als Anschlag wirkt, die eine weitere Verschiebebewegung des Endlaufwagens 20 entlang des Dachlängsträgers 10 verhindert. Die auf den Verriegelungsbolzen 26 wirkende Federkraft sorgt dafür, dass der Verriegelungsbolzen 26 in seiner ausgefahrenen Arretierposition verbleibt und so eine Verschiebebewegung des Endlaufwagens in Richtung der Verschlussnase 30 blockiert.

Allerdings ist die auf den Verriegelungsbolzen 26 wirkende Federkraft so bemessen, dass durch ruckartiges Verschieben des Endlaufwagens 20 entlang des Dachlängsträgers 10 die Federkraft überwunden wird und der Verriegelungsbolzen 26 entlang der Führungsfläche 31 gleitet. Dadurch wird der Verriegelungsbolzen 26 eingedrückt bzw. in Richtung der Fahrzeuglängsachse bewegt, so dass der Verriegelungsbolzen 26 die Verschlussnase 30 überwinden kann. So ist es möglich, ohne eine Betätigung des Zugseils 27 eine Entriegelung des Endlaufwagens 20 zu bewirken. Insbesondere ist die Federkraft, die auf den Verriegelungsbolzen 26 wirkt, so bemessen, dass ein Bediener durch manuellen Kraftaufwand ohne besondere Schwierigkeiten ein Gleiten des Verriegelungsbolzens 26 entlang der Führungsfläche 31 und somit ein Lösen der Verriegelung bewirken kann. Gleichzeitig ist die Federkraft so groß, dass im Arretierzustand gemäß Fig. 3 ein selbstständiges Lösen des Endlaufwagens 20 verhindert ist.

Zur Betätigung der Verschiebebewegung des Endlaufwagens 20 ist an einer Außenseite des Endlaufwagens 20 ein Verdeckzugband 23 vorgesehen. Das Verdeckzugband 23 kann insbesondere im Bereich der Befestigung der Höhenführungsrolle 21 des Endlaufwagens 20 angeordnet sein. Vorzugsweise ist das Verdeckzugband 23 mit dem Außenschlitten 28 fest verbunden.

Das Verdeckzugband erstreckt sich im Wesentlichen vertikal nach unten, wobei das Verdeckzugband bei dem dargestellten Ausführungsbeispiel eine Länge aufweist, die etwas länger als die Höhe des vertikalen Schenkels 12 des Dachlängsträgers 10 ist. An einem freien Ende des Verdeckzugbands 23 ist eine Eingriffsöse 26 vorgesehen.

Die Eingriffsöse dient zur Aufnahme eines Hakens einer Betätigungsstange. Mittels der Betätigungsstange kann ein Benutzer die Eingriffsöse 24 greifen und so über das Verdeckzugband 23 eine Verschiebebewegung des Endlaufwagens 20 entlang der Dachlängsträger 10 bewirken.

### Bezugszeichenliste

- 10: Dachlängsträger
- 11: Horizontaler Schenkel
- 12: Vertikaler Schenkel
- 13: Innenseite
- 14: Ausnehmung
- 15: Höhenführungsschiene
- 16: Seitenführungsschiene
- 17: Seitenplanenführungsschiene
- 18: Schieberungenführungsschiene
- 20: Endlaufwagen
- 21: Höhenführungsrolle
- 22: Seitenführungsrolle
- 23: Verdeckzugband
- 24: Eingriffsöse
- 25: Endspriegel
- 26: Verriegelungsbolzen
- 27: Zugseil
- 28: Außenschlitten
- 30: Verschlussnase
- 31: Führungsfläche
- 32: Spitze
- 33: Verbindungsflansch
- 34: Bolzen

## Patentansprüche

1. Nutzfahrzeugaufbau mit einem Schiebeverdeck, das entlang von Dachlängsträgern (10) geführt ist und wenigstens einen Endlaufwagen (20) mit einem federvorgespannten Verriegelungsbolzen (26) aufweist, wobei der Verriegelungsbolzen (26) zur Arretierung des Endlaufwagens (20) in einer Offenstellung und/oder einer Schließstellung des Schiebeverdecks mit einer Verschlussnase (30) zusammenwirkt, die an einem Dachlängsträger (10) befestigt ist und wenigstens zwei schräge Führungsflächen (31) für den Verriegelungsbolzen (26) aufweist,
**dadurch gekennzeichnet, dass**
die Verschlussnase (30) eine zur Fahrzeuglängsachse weisende, v-förmige Spitze (32) bildet, die durch die schrägen Führungsflächen (31) gebildet ist, wobei die schrägen Führungsflächen (31) in der Spitze (32) zusammenlaufen.

2. Nutzfahrzeugaufbau nach Anspruch 1,
**dadurch gekennzeichnet, dass**
der Verriegelungsbolzen (26) mit einer Feder gekoppelt ist, wobei eine Federkraft der Feder so bemessen ist, dass der Verriegelungsbolzen (26) durch Ziehen des Endlaufwagens (20) in Fahrzeuglängsrichtung automatisch in eine Arretierposition überführbar ist.

3. Nutzfahrzeugaufbau nach Anspruch 2,
**dadurch gekennzeichnet, dass**
der Verriegelungsbolzen (26) in der Arretierposition die Verschlussnase (30) hintergreift.

4. Nutzfahrzeugaufbau nach einem der vorhergehenden Ansprüche,
**dadurch gekennzeichnet, dass**
die Verschlussnase (30) an einer Innenseite (13) eines horizontalen Schenkels (11) des Dachlängsträgers (10) fixiert ist.

5. Nutzfahrzeugaufbau nach einem der vorhergehenden Ansprüche,
**dadurch gekennzeichnet, dass**
die Verschlussnase (30) zwei seitliche Verbindungsflansche (33) zur festen Verbindung, insbesondere zur Bolzen- oder Schraubenverbindung, mit dem Dachlängsträger (10) aufweist.

6. Nutzfahrzeugaufbau nach einem der vorhergehenden Ansprüche,
**dadurch gekennzeichnet, dass**
der Endlaufwagen (20) zwei gegenüberliegende Verriegelungsbolzen (26) aufweist, die mit einem Zugseil (27) miteinander verbunden sind.

7. Nutzfahrzeugaufbau nach Anspruch 6,
**dadurch gekennzeichnet, dass**
an gegenüberliegenden Dachlängsträgern (10) jeweils wenigstens eine Verschlussnase (30) angeordnet ist.

8. Nutzfahrzeugaufbau nach Anspruch 6 oder 7,
**dadurch gekennzeichnet, dass**
das Zugseil (27) bei Betätigung den/die Verriegelungsbolzen (26) entgegen der Federkraft der Feder in die Offenstellung überführt.

9. Nutzfahrzeug mit einem Nutzfahrzeugaufbau nach einem der vorhergehenden Ansprüche.

## Claims

1. A commercial vehicle structure having a sliding cover which is guided along longitudinal roof supports (10) and has at least one end carriage (20) with a springloaded locking bolt (26), the locking bolt (26) interacting with a closure projection (30), which is fastened to a longitudinal roof support (10) and has at least two oblique guide faces (31) for the locking bolt (26), in order to lock the end carriage (20) when the sliding cover is in an open position and/or in a closed position,
**characterised in that**
the closure projection (30) forms a V-shaped peak (32) which points towards the vehicle longitudinal axis and is formed by the oblique guide faces (31), wherein the oblique guide faces (31) join at the peak (32).

2. The commercial vehicle structure according to Claim 1,
**characterised in that**
the locking bolt (26) is coupled to a spring, wherein a spring force of the spring is such that the locking bolt (26) can be transferred automatically into a locking position by pulling the end carriage (20) in the vehicle longitudinal direction.

3. The commercial vehicle structure according to Claim 2,
**characterised in that**
the locking bolt (26) fits behind the closure projection (30) when in the locking position.

4. The commercial vehicle structure according to any one of the preceding claims,
**characterised in that**
the closure projection (30) is fixed to an inner side (13) of a horizontal branch (11) of the longitudinal roof support (10).

5. The commercial vehicle body according to any one of the preceding claims,
**characterised in that**
the closure projection (30) has two lateral connecting flanges (33) for fixed connection, in particular for bolt connection or screw connection, to the longitudinal roof support (10).

6. The commercial vehicle body according to any one of the preceding claims,
**characterised in that**
the end carriage (20) has two opposing locking bolts (26) which are connected to each other with a pulling rope (27).

7. The commercial vehicle structure according to Claim 6,
**characterised in that**
at least one closure projection (30) is arranged in each case on opposing longitudinal roof supports (10).

8. The commercial vehicle structure according to Claim 6 or 7,
**characterised in that**
the pulling rope (27), when actuated, transfers the locking bolt(s) (26) into the open position counter to the spring force of the spring.

9. A commercial vehicle having a commercial vehicle structure according to any one of the preceding claims.

## Revendications

1. Superstructure de véhicule utilitaire, dotée d'une bâche coulissante, qui est guidée le long de renforts de toit (10) et qui comporte au moins un chariot arrière (20) pourvu d'un boulon de verrouillage (26) précontraint par ressort, pour bloquer le chariot arrière (20) dans une position ouverte et/ou dans une position fermée de la bâche coulissante, le boulon de verrouillage (26) coopérant avec un ergot de fermeture (30), qui est fixé sur un renfort de toit (10) et qui comporte au moins deux surfaces de guidage (31) obliques pour le boulon de verrouillage (26),
**caractérisée en ce que**
l'ergot de fermeture (30) forme une pointe (32) en forme de V, dirigée vers l'axe longitudinal du véhicule, qui est formée par les surfaces de guidage (31) obliques, les surfaces de guidage (31) obliques convergeant dans la pointe (32).

2. Superstructure de véhicule utilitaire selon la revendication 1,
**caractérisée en ce que**
le boulon de verrouillage (26) est accouplé avec un ressort, une force de ressort du ressort étant dimensionnée de telle sorte qu'en tirant le chariot arrière (20) dans la direction longitudinale du véhicule, le boulon de verrouillage (26) soit susceptible d'être transféré automatiquement dans une position de blocage.

3. Superstructure de véhicule utilitaire selon la revendication 2,
**caractérisée en ce que**
dans la position de blocage, le boulon de verrouillage (26) accroche par l'arrière l'ergot de fermeture (30).

4. Superstructure de véhicule utilitaire selon l'une quelconque des revendications précédentes,
**caractérisée en ce que**
l'ergot de fermeture (30) est fixé sur une face intérieure (13) d'une branche (11) horizontale du renfort de toit (10).

5. Superstructure de véhicule utilitaire selon l'une quelconque des revendications précédentes,
**caractérisée en ce que**
l'ergot de fermeture (30) comporte deux brides d'assemblage (33) latérales, destinées à l'assemblage fixe, notamment à l'assemblage par boulon ou par vis avec le renfort de toit (10).

6. Superstructure de véhicule utilitaire selon l'une quelconque des revendications précédentes,
**caractérisée en ce que**
le chariot arrière (20) comporte deux boulons de verrouillage (26) en vis-à-vis, qui sont reliés l'un à l'autre par un câble de traction (27).

7. Superstructure de véhicule utilitaire selon la revendication 6,
**caractérisée en ce que**
sur des renforts de toit (10) placés en vis-à-vis est placé respectivement un ergot de fermeture (30).

8. Superstructure de véhicule utilitaire selon la revendication 6 ou 7,
**caractérisée en ce que**
lors de l'actionnement, le câble de traction (27) fait passer le/les boulon(s) de verrouillage (26) dans la position d'ouverture, à l'encontre de la force de ressort du ressort.

9. Véhicule utilitaire, doté d'une superstructure de véhicule utilitaire selon l'une quelconque des revendications précédentes.
